# EUROPEAN PATENT SPECIFICATION

(11) **EP 3 176 619 B1**
(45) Date of publication and mention of the grant of the patent: **30.12.2020**
(21) Application number: 16161126.4
(22) Date of filing: 18.03.2016
(51) Int. Cl.: G02B 6/44, G01V 1/16, G01V 1/22

(54) **MONOTUBE SEISMIC CABLE**
SEISMISCHES EINZELROHRDÄMPFERKABEL
CÂBLE SISMIQUE MONOTUBE

(30) Priority: 02.12.2015 IN 4556MU2015
(43) Date of publication of application: 07.06.2017
(73) Proprietor: Sterlite Technologies Ltd, Maharashtra 431 136 (IN)
(72) Inventor: KUMAR, Sravan, 500039 Telangana (IN); COPPIN, Phill, Denbigh, LL16 4BW (GB); SAHOO, Kishore, Haveli (IN); SRIVASTAVA, Shivam, Madhya Pradesh (IN); TENZING, Kangbang Singh, Pin No. 795001 Manipur (IN); BUYONG, Liu, Nanjing Jiangsu 210032 (CN)
(74) Representative: Hepworth Browne

(56) References cited:
- EP-A2- 1 076 253
- WO-A1-2015/195095
- US-B1- 6 459 837

## Description

### TECHNICAL FIELD

The present application in based on, and claims priority from an Indian application number 4556/MUM/2015 filed on **2nd December, 2015.** The present disclosure relates to the field of fiber optics and more specifically, to a re-deployable optical fiber cable for sensing applications in a seismic activity area.

### BACKGROUND

Optical fiber cables have revolutionized the industrial sector globally by offering a variety of solutions for enabling a reliable, efficient, lighter, faster and cost effective management of resources. Moreover, the variety of solutions involves faster telecommunication services, precise sensing, medical surgical operations, structural studies in civil engineering, imaging applications, nuclear power research and the like. Examples are provided by telecommunication cables described by EP 1076253 A2 and US 6459837 B1. One of the prime industries which utilize the optical fiber cable is exploration and production industry. The exploration and production industry focuses on exploring and extracting various natural resources including oil, gas, petroleum and the like.

Moreover, the numerous operations in the exploration and production industry critically rely on usage of drilling machines, boring machines, pumping machines, excavators, cranes and trucks due to nature of the operations. There is a consistent need for continuous monitoring and sensing of various seismic activities taking place in area of operations of the exploration and production industry. Traditionally, the sensing and monitoring is performed by utilizing various sensing applications. The sensing applications employ various sensing systems. This is achieved by installing optical fiber cable across the seismic activity area. An array of acoustic sensors is installed along the length of the optical fiber cables with a separation between each of the acoustic sensors. Furthermore, the acoustic sensors detect and analyze the acoustic waves generated in the optical fiber cable.

Moreover, the efficiency, grade and performance of the results obtained from the optical detectors and the array of acoustic sensors is based on a structure and materials used in manufacturing of the optical fiber cable. Further, the structure and the materials used affects weight, crush resistance, kink diameter, packing efficiency and cost of deploying optical fiber cable in the seismic activity area. Traditionally, the structure of the optical fiber cable is made of a number of layers housing a plurality of optical fibers. The number of layers includes a binder enclosing optical fibers, a buffer coating, strengthening fibers, a cable jacket and one or more strength members.

Several present systems are known in the art which provide the optical fiber cables employed in the exploration and production industry. For example, a dielectric optical fiber with reduced preferential bending is described in one of the prior arts. The optical fiber cable includes one or more tubes with each tube containing a number of optical fibers and a plastic jacket that encloses the tubes. A pair of diametrically opposed rods is partially embedded in the polyethylene jacket. The rods are made from continuous-filament glass fibers embedded in epoxy. The optical fiber cable uses a buffer tube with thixotropic gel filled inside.

Moreover, an optical fiber cable with an interlocking stitch binder is described in another prior art. The optical fiber cable includes a plurality of fibers, binders, a water blocking material and a jacket surrounding the tubes. The binder provides an interlocking stitch formed of one or more yarns to provide improved fiber unit identification.

The binder in the above mentioned optical fiber cable is non-helically bounded. In addition, the optical fiber cable utilizes a water blocking material that evidently increases the thickness of the optical fiber cable. In addition, the jacket material is made of poly vinyl chloride or polyethylene. The above mentioned optical fiber cable is inefficient for the seismic activity area.

Going further, the existing optical fiber cables available are inefficient and unreliable when employed in the exploration and production industry. Presently, the optical fiber cable utilizes a wet buffer tube that eventually restrains the acoustic waves required for the sensing applications.

In light of the above stated discussion, there is a need for an optical fiber cable that overcomes the above stated disadvantages.

### SUMMARY

The present disclosure seeks to provide an optical fiber cable.

The present invention provides an optical fiber cable suitable for redeployment for seismic activities as defined by claim 1.

Embodiments of the present disclosure substantially eliminate or at least partially address the aforementioned problems in the prior art, and provides an optical fiber cable having buffer tube made of halogen free material based, dry and produces negligible amount of smoke in high temperature operations. The buffer tube provides the higher kink resistance or higher kink diameter of 25 mm. The aramid yarn is significantly strong enough to handle the significant amount of the tensile loads, bends and stretches. The aramid yarn provides thermal resistance to buffer tube during sheathing process. The second layer of TPU offers a robust resistance to chemicals, heat, oil and grease, tension, the crush and the kink resistance.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

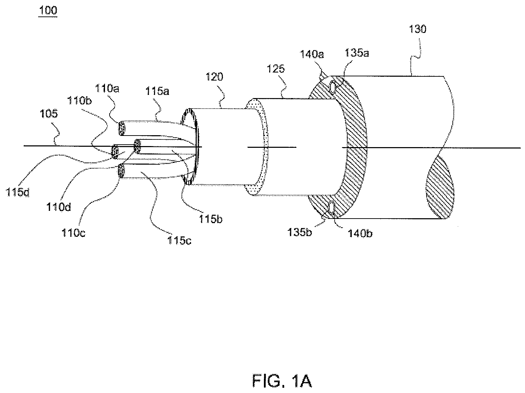

FIG. 1A illustrates a perspective view of an optical fiber cable for sensing applications in a seismic activity area, in accordance with various embodiments of the present disclosure;

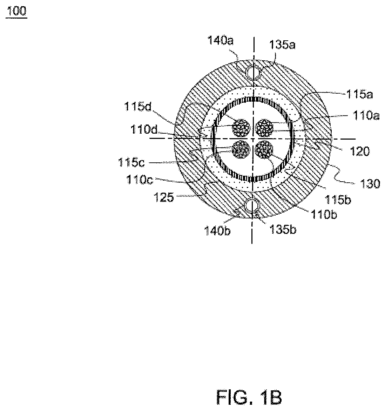

FIG. 1B illustrates a cross sectional view of the optical fiber cable of FIG. 1A, in accordance with various embodiments of the present disclosure; and

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides an optical fiber cable. The optical fiber cable includes a buffer tube substantially present along a longitudinal axis. Further, the optical fiber cable includes a first layer. The first layer surrounds the buffer tube. The optical fiber cable includes a second layer. The second layer surrounds the first layer. The optical fiber cable includes one or more strength members embedded inside the second layer. Furthermore, the buffer tube encloses a plurality of optical fibers. In addition, the buffer tube is dry and made of a low smoke zero halogen material. The first layer and the second layer provide a kink resistance, a crush resistance and flexibility to the optical fiber cable. In addition, the second layer is made of a thermoplastic polyurethane material. Furthermore, each of the one or more strength members is coated with a layer of ethylene acrylic acid. The layer of ethylene acrylic acid prevents slipping of the one or more strength members from the second layer. The optical fiber cable has a cable weight of about 52 kilogram/kilometer. Further, the optical fiber cable has a kink diameter of about 25 millimeters and a crush resistance of about 2000 Newton/10000 millimeter2. In addition, the optical fiber cable has a packing density of about 50 percent.

According to an embodiment, the optical fiber cable is a re-deployable monotube seismic cable. The optical fiber cable is designed to sustain damages with periodical changes in position of deployment in the seismic activity area. Moreover, the sensing applications of the optical fiber cable in the seismic activity area include a detection of scaled temperature zones, scaled pressure or scaled vibration zones, leakages in pipelines, accidental fires and the like. Examples of the seismic activity area include but may not be limited to an oil well, a gas well, an onshore drilling area, an oil pipeline and a gas pipeline. The optical fiber cable has a cable diameter. In an embodiment of the present disclosure, the cable diameter of the re-deployable optical fiber cable is about 7.6 millimeters. In another embodiment of the present disclosure, the optical fiber cable may have any suitable value. A combination of materials and structure of the optical fiber cable enables an improvement in a plurality of parameters of the optical fiber cable. The plurality of parameters of the optical fiber cable includes a kink diameter, a crush resistance, a cable weight, a packing efficiency, and the like. In an embodiment of the present disclosure, the optical fiber cable has the crush resistance of about 2000 Newton per 10000 millimeter². In another embodiment of the present disclosure, the optical fiber cable may have any suitable crush resistance. The cable weight of the optical fiber cable is about 52 kilograms/kilometer.

According to an embodiment, the longitudinal axis passes perpendicularly through a mid-point of the cross section of the optical fiber cable. The longitudinal axis describes symmetry in a structure of the optical fiber cable.

According to an embodiment, the plurality of optical fibers is arranged in bundles of optical fibers. In an embodiment of the present disclosure, the optical fiber cable has four bundles of optical fibers. In another embodiment of the present disclosure, the optical fiber cable has more than 4 bundles of optical fibers. Each bundle of the plurality of optical fibers includes a pre-defined number of optical fibers. The pre-defined number of optical fibers depends on a scale of application and an area of the application of the optical fiber cable. In addition, the optical fiber cable has a packing efficiency less than or equal to 50 percent owing to the pre-defined number of optical fibers in inside the buffer tube. In an embodiment of the present disclosure, the 4 bundles of optical fibers include 48 optical fibers (each bundle having 12 or more optical fibers) for an optimized performance. In another embodiment of the present disclosure, the 4 bundles of optical fibers include 48 optical fibers (each bundle including less than 12 optical fibers) for the optimized performance. In addition, the optimized performance is derived in parlance of a structural design of the optical fiber cable, a material composition and the cable weight of the optical fiber cable. In an embodiment of the present disclosure, the pre-defined number of optical fibers in each bundle of the plurality of optical fibers is 12. In another embodiment of the present disclosure, the pre-defined number of optical fibers in each bundle of the plurality of optical fibers is 24. In general, there are 12 standard colors of fibers. Each fiber of the plurality of optical fibers may be marked with different combinations of marking. In addition, each fiber of the plurality of optical fibers is marked for distinguishing fibers. Out of 24 fibers, 12 fibers are given 12 standard colors and remaining 12 fibers are single ring-marked. In yet another embodiment of the present disclosure, the pre-defined number of optical fibers in each bundle of the plurality of optical fibers is 48. Moreover, out of 48 fibers, a first set of 12 fibers are colored with 12 standard colors and a second set of 12 fibers are colored and given a single ring-mark. In addition, a third set of 12 fibers are colored and given a double ring-mark and a fourth set of 12 are colored and given a triple ring-mark. Each optical fiber of the plurality of optical fibers cables may be any type of fiber. In an embodiment of the present disclosure, each optical fiber in each bundle of the plurality of optical fibers is a 250±5µm optical fiber. In another embodiment of the present disclosure, each optical fiber in each bundle of the plurality of optical fibers is a 200±5µm fiber. In an embodiment of the present disclosure, each optical fiber in each bundle of the plurality of optical fibers is a single mode fiber. In another embodiment of the present disclosure, each optical fiber in each bundle of the plurality of optical fibers is a multi-mode fiber.

According to an embodiment, a plurality of binders appears as binder threads around each of the plurality of optical fibers. In an embodiment of the present disclosure, the plurality of binders is four or more. In another embodiment of the present disclosure, the optical fiber cable has no binders. Further, each of the plurality of binders is made of a material selected from a group comprising a polyester thread, an aramid yarn and a polypropylene binder. In addition, the plurality of binders separates each bundle of the optical fibers for a protection and an identification of the optical fiber cable. In an embodiment of the present disclosure, each of the plurality of binders is color coded for an ease in an identification of a corresponding bundle of fibers of the plurality of optical fibers. Each binder of the plurality of binders possesses a different color. In addition, the different color helps in distinguishing each binder from another binder of the plurality of binders.

According to an embodiment, the buffer tube is designed to provide a kink resistance and flexibility to the optical fiber cable. The kink resistance is a parameter dependent on a scale of bending of the optical fiber cable. In general, the kink resistance is often measured in terms of bend radius or a kink diameter. The kink diameter or the bend radius allows more bending of each optical fiber in each bundle of the plurality of optical fibers without sustaining any damage. The scale of bending of the optical fiber cable in terms of the kink diameter is about 25 millimeters. Further, the buffer tube is dry and kink resistant. In general, the buffer tube is dry owing to a requirement of free movement of optical fibers within the buffer tube without sustaining friction. Moreover, the buffer tube may be made of any suitable material. In an embodiment of the present disclosure, the buffer tube is made of a low smoke zero halogen (hereinafter "LSZH") material. The LSZH material is a flaming retardant polyolefin material. The LSZH material includes polyolefin, ethyl vinyl acetate (hereinafter "EVA") and flame retardant fillers. Examples of the flame retardant fillers include but may not be limited to Al(OH)3 and Mg(OH)2. Moreover, the buffer tube is halogen free and generates minimum smoke in flammable and heated environments. In addition, the buffer tube has high melt strength and low melt flow index to facilitate application of the buffer tube in manufacturing of the optical fiber cable. In addition, the dry buffer tube is easy to process in manufacturing of the optical fiber cable. In an embodiment of the present disclosure, the buffer tube has an inner diameter of about 3.5 millimeters, an outer diameter of about 4.4 millimeters and a thickness of about 0.5 millimeter. In another embodiment of the present disclosure, the buffer tube may have any suitable inner diameter, the outer diameter and the thickness. The buffer tube facilitates a free movement of each optical fiber in each bundle of the plurality of optical fibers owing to the availability of the space inside the buffer tube. In addition, the buffer tube optimizes the cable weight of the optical fiber cable. The buffer tube meets an optimal requirement of mechanical properties to facilitate the free fiber movement. The free movement of each optical fiber in each bundle of the plurality of optical fibers present inside the buffer tube increases return of each optical fiber to original position.

According to an embodiment, an array of acoustic sensor trays is installed in vicinity of the optical fiber cable along the longitudinal axis. Each sensor tray of the array of acoustic sensor trays is placed at a separation in a range of 10 meters-20 meters. The array of the acoustic sensor trays sense acoustic waves generated in the each optical fiber in each bundle of the plurality of optical fibers. Accordingly, the buffer tube facilitates transfer of the acoustic waves without any restrain through the optical fiber cable.

According to an embodiment, the first layer facilitates optimization of the cable weight of the optical fiber cable. In addition, the first layer is made of an aramid yarn. The first layer protects the buffer tube in the optical fiber cable against the crush resistance and kinks. Furthermore, the first layer provides tensile strength along a length of the optical fiber cable before and after deployment in the seismic activity area. The re-deployment requires multiple rolls of the optical fiber cable. Further, the first layer bears the kinks and tensions generated from a plurality of rolls of the optical fiber cable from a storage drum. In addition, the first layer has a first set of properties crucial for the protection of the optical fiber cable. The set of properties of the first layer includes a resistance to abrasion, a resistance to organic solvent, non-conductivity and a minimum flammability. In addition, the set of properties includes integrity of fabric at elevated temperatures and sensitivity to acids and salts.

According to an embodiment, the first layer and the second layer provides the kink resistance, the crush resistance and flexibility to the optical fiber cable. Moreover, the second layer is designed to withstand the flammable and the heated environment of the seismic activity area. The second layer is made up thermoplastic polyurethane (hereafter "TPU") jacket. The second layer has a second set of properties crucial for the protection of the optical fiber cable in the flammable and the heated environment of the seismic activity area. Furthermore, the second set of properties includes an abrasion resistance, a minimized-temperature operation, shear strength elasticity, an optimum level of transparency and oil and grease resistance. Further, the set of properties facilitate sustenance of the optical fiber cable in the seismic activity area. In an embodiment of the present disclosure, the second layer has a thickness of about 1.4 millimeters. In another embodiment of the present disclosure, the second layer may have any suitable thickness.

According to an embodiment, the second layer may include more than 1 strength members along the longitudinal axis of the optical fiber cable. In an embodiment of the present disclosure, the second layer may have no embedded strength members. In an embodiment of the present disclosure, each of the one or more strength members is made of steel. In another embodiment of the present disclosure, each of the one or more strength members is made of copper. In yet another embodiment of the present disclosure, each of the one or more strength members is made of fiber reinforced plastic (hereafter "FRP"). In yet another embodiment of the present disclosure, each of the plurality of the strength members is made of aramid fibers. In yet another embodiment of the present disclosure, each of the one or more strength members may be made of any other suitable metal or non-metal. The one or more strength members are positioned to provide rigidity to the optical fiber cable and prevent the optical fiber cable from buckling.

According to an embodiment, the first layer of ethylene acrylic acid and the second layer of ethylene acrylic acid prevent slipping of each of the one or more strength members.

### DETAILED DESCRIPTION

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

Referring now to the drawings, particularly by their reference numbers, **FIG. 1A** illustrates an optical fiber cable **100** for sensing applications in a seismic activity area, in accordance with various embodiments of the present disclosure. Further, the optical fiber cable **100** includes a plurality of optical fibers **110a-110d** (as seen in **FIG. 1A** in conjunction with a cross-sectional view of the optical fiber cable **100** provided in **FIG. 1B**), a plurality of binders **115a-115d,** a buffer tube **120,** and a first layer **125,** a second layer **130** and one or more strength members **135a-b.** Further, the optical fiber cable **100** is positioned symmetrically and substantially along a longitudinal axis **105.** The optical fiber cable **100** includes the plurality of optical fibers **110a-110d** substantially present parallel along the longitudinal axis **105.** Each bundle of optical fibers of the plurality of optical fibers **110a-110d** is surrounded by a binder of the plurality of binders **115a-115d.** The buffer tube **120** is substantially present along the longitudinal axis **105** and encloses the plurality of optical fibers **110a-110d**. The first layer **125** surrounds the buffer tube **120** to provide tensile strength. The second layer **130** surrounds the first layer **125.** The one or more strength members **135a-b** are embedded inside the first layer **125** and positioned parallel along the longitudinal axis **105** of the optical fiber cable **100.** The one or more strength members **135a-b** includes a first strength member **135a** and a second strength member **135b.** Each of the one or more strength members **135a-b** is coated with a first layer of ethylene acrylic acid **140a** and a second layer of ethylene acrylic acid **140b.**

Modifications to embodiments of the present disclosure described in the foregoing are possible without departing from the scope of the present invention as defined by the accompanying claims. Expressions such as "including", "comprising", "incorporating", "have", "is" used to describe and claim the present invention are intended to be construed in a non-exclusive manner, namely allowing for items, components or elements not explicitly described also to be present. Reference to the singular is also to be construed to relate to the plural.

## Claims

1. An optical fiber cable (100) comprising:
a buffer tube (120) substantially present along a longitudinal axis (105), the buffer tube (120) encloses a plurality of optical fibers (104a-104d);
a first layer (125) surrounding the buffer tube (120);
a second layer (130) surrounding the first layer (125), the first layer (125) and the second layer (130) provide a kink resistance, a crush resistance and a flexibility to the optical fiber cable (100); and
one or more strength members (135a-b) embedded inside the second layer (130),
wherein the buffer tube (120) is dry and the buffer tube (120) is made of a low smoke zero halogen material, the second layer (130) is made of a thermoplastic polyurethane material, each of the one or more strength members (135a-b) is coated with a layer of ethylene acrylic acid (140a-b), the layer of ethylene acrylic acid (140a-b) prevents slipping of the one or more strength members (135a-b) from the second layer (130), the optical fiber cable (100) has a cable weight of 52 kilogram/kilometer, the optical fiber cable (100) has a kink diameter of 25 millimeters, the optical fiber cable (100) has a crush resistance of 2000 Newton/10000 millimeter² and the optical fiber cable (100) has a packing density of 50 percent.

2. The optical fiber cable (100) according to claim 1, further comprising a plurality of binders (115a-d) surrounding the plurality of optical fibers (110a-d), each of the plurality of binders (115a-d) is color coded for an ease in an identification of a corresponding fibers of the plurality of optical fibers (110a-d), each of the plurality of binders (115a-d) is a binder thread and each of the plurality of binders (115-d) is made of a material selected from a group consisting of a polyester thread, an aramid yarn and a polypropylene binder.

3. The optical fiber cable (100) according to claim 1, wherein that each of the plurality of optical fibers (110a-110d) is enclosed within the buffer tube (120).

4. The optical fiber cable (100) according to claim 1, wherein that each of the plurality of optical fibers (110a-110d) is ring marked.

5. The optical fiber cable (100) according to claim 1, wherein that each of the plurality of optical fibers (110a-110h) is color coded from a set of standard fiber colors and the set of standard fiber colors comprises twelve colors.

6. The optical fiber cable (100) according to claim 1, wherein that each of the one or more strength members (135a-h) is made of a fiber reinforced plastic.

7. The optical fiber cable (100) according to claim 1, wherein that each bundle of optical fibers of the plurality of optical fibers (110a-110d) comprises 12 optical fibers.

8. The optical fiber cable (100) according to claim 1, wherein that the buffer tube (120) has an inner diameter of 3.5 millimeters and an outer diameter of 4.4 millimeters.

9. The optical fiber cable (100) according to claim 1, wherein that the buffer tube (120) has a thickness of 0.5 millimeter.

10. The optical fiber cable (100) according to claim 1, wherein that the optical fiber cable (100) has a cable diameter of 7.6 millimeters.

11. The optical fiber cable (100) according to claim 1, wherein that the second layer (130) has a thickness of 1.4 millimeters.

## Patentansprüche

1. Ein optisches Faserkabel (100) umfassend:
ein Pufferrohr (120), das im Wesentlichen entlang einer longitudinalen Achse (105) vorhanden ist, wobei das Pufferrohr (120) mehrere optische Fasern (104a-104d) umgibt;
eine erste Schicht (125), die das Pufferrohr (120) umgibt;
eine zweite Schicht (130), die die erste Schicht (125) umgibt, wobei die erste Schicht (125) und die zweite Schicht (130) einen Knickwiderstand, einen Stauchwiderstand und eine Flexibilität für das optische Faserkabel (100) aufweisen; und
ein oder mehrere Festigkeitselemente (135a-b), die in der zweiten Schicht (130) eingebettet sind,
wobei das Pufferrohr (120) trocken ist und das Pufferrohr (120) aus einem raucharmen, halogenfreien Material ist, die zweite Schicht (130) aus einen thermoplastischen Polyurethan-Material, jedes der ein oder mehreren Festigungselemente (135a-b) mit einer Schicht aus Ethylenacrylsäure (140a-b) beschichtet ist, die Schicht aus Ethylenacrylsäure (140a-b) ein Abrutschen des einen oder der mehreren Festigkeitselemente (135a-b) von der zweiten Schicht (130) verhindert, das optische Faserkabel (100) ein Kabelgewicht von 52 Kilogramm/Kilometer aufweist, das optische Faserkabel (100) einen Knickdurchmesser von 25 Millimetern aufweist, das optische Faserkabel (100) einen Stauchwiderstand von 2000 Newton/10000 Milimentern² aufweist und das optische Faserkabel (100) eine Packungsdichte von 50 Prozent aufweist.

2. Das optische Faserkabel (100) nach Anspruch 1, weiter umfassend mehrere Bindemittel (115a-d), die mehrere optischen Fasern (110a-d) umgeben, wobei jedes der mehreren Bindemittel (115a-d) für eine Vereinfachung einer Identifikation einer entsprechenden Faser der mehreren optischen Fasern (110a-d) farbkodiert ist, jedes der mehreren Bindemittel (115a-d) ein Bindemittelstrang ist und jedes der mehreren Bindemittel (115-d) aus einem Material ausgewählt aus einer Gruppe bestehend aus einem Polyesterstrang, einem Aramidgarn und einem Polypropylenbindemittel ist.

3. Das optische Faserkabel (100) nach Anspruch 1, wobei jede der mehreren optischen Fasern (110a-110d) in der Pufferröhre (120) eingeschlossen ist.

4. Das optische Faserkabel (100) nach Anspruch 1, wobei jede der mehreren optischen Fasern (110a-110d) ringmarkiert ist.

5. Das optische Faserkabel (100) nach Anspruch 1, wobei jede der mehreren optischen Fasern (110a-110h) von einem Satz von Standardfaserfarben farbkodiert ist und der Satz von Standardfaserfarben zwölf Farben umfasst.

6. Das optische Kabel (100) nach Anspruch 1, wobei jedes des einen oder der mehreren Festigkeitselemente (135a-h) aus einem faserverstärkten Kunststoff ist.

7. Das optische Kabel (100) nach Anspruch 1, wobei jedes Bündel von optischen Fasern der mehreren optischen Fasern (110a-110d) 12 optische Fasern umfasst.

8. Das optische Faserkabel (100) nach Anspruch 1, wobei das Pufferrohr (120) einen Innendurchmesser von 3.5 Millimetern und einen Außendurchmesser von 4.4 Millimetern aufweist.

9. Das optische Faserkabel (100) nach Anspruch 1, wobei das Pufferrohr (120) eine Dicke von 0.5 Millimetern aufweist.

10. Das optische Faserkabel (100) nach Anspruch 1, wobei das optische Faserkabel (100) einen Kabeldurchmesser von 7.6 Millimetern aufweist.

11. Das optische Faserkabel (100) nach Anspruch 1, wobei die zweite Schicht (130) eine Dicke von 1.4 Millimetern aufweist.

## Revendications

1. Câble de fibre optique (100) comprenant :
un tube tampon (120) présent sensiblement le long d'un axe longitudinal (105), le tube tampon (120) renfermant une pluralité de fibres optiques (104a-104d) ;
une première couche (125) entourant le tube tampon (120) ;
une deuxième couche (130) entourant la première couche (125), la première couche (125) et la deuxième couche (130) fournissant une résistance à la torsion, une résistance à l'écrasement et une flexibilité au câble de fibre optique (100) ; et
un ou plusieurs organes de renfort (135a-b) encastrés à l'intérieur de la deuxième couche (130) ;
selon lequel le tube tampon (120) est sec et le tube tampon (120) est constitué d'un matériau à teneur zéro en halogénure à basse émission de fumée, la deuxième couche (130) est constitué d'un matériau en polyuréthanne thermoplastique, chacun du ou des plusieurs organes de renfort (135a-b) étant enrobé d'une couche d'acide acrylique d'éthylène (140a-b), la couche d'acide acrylique d'éthylène (140a-b) empêchant le glissement du ou des plusieurs organes de renfort (135a-b) dans la deuxième couche (130), le câble de fibre optique (100) présentant un poids de câble de 52 kilogrammes/kilomètre, le câble de fibre optique (100) présentant un diamètre de torsion de 25 millimètres, le câble de fibre optique (100) présentant une résistance à l'écrasement de 2000 newtons/10000 millimètres carrés, et le câble de fibre optique (100) présentant une densité volumétrique de 50 pourcents.

2. Câble de fibre optique (100) selon la revendication 1, comprenant en outre une pluralité de liants (115a-d) entourant la pluralité de fibres optiques (110a-d), chacune de la pluralité de liants (115a-d) étant codée en couleur afin de faciliter une identification de fibres correspondantes de la pluralité de fibres optiques (110a-d), chacun parmi la pluralité de liants (115a-d) étant un fil de liaison et chacun parmi la pluralité de liants (115-d) étant constitué d'un matériau choisi dans le groupe consistant en un fil polyester, un fil aramide et un liant de polypropylène.

3. Câble de fibre optique (100) selon la revendication 1, selon lequel chacune parmi la pluralité de fibres optiques (110a-110d) est enfermée à l'intérieur du tube tampon (120).

4. Câble de fibre optique (100) selon la revendication 1, selon lequel chacune parmi la pluralité de fibres optiques (110a-110d) est marquée par un anneau.

5. Câble de fibre optique (100) selon la revendication 1, selon lequel chacune parmi la pluralité de fibres optiques (110a-110h) est codée en couleurs à partir d'un ensemble de couleurs de fibre standards et l'ensemble de couleurs de fibre standards comprend 12 couleurs.

6. Câble de fibre optique (100) selon la revendication 1, selon lequel chacun parmi le ou les plusieurs organes de renfort (135ah) est constitué d'une matière plastique renforcée à la fibre.

7. Câble de fibre optique (100) selon la revendication 1, selon lequel chaque faisceau de fibres optiques parmi la pluralité de fibres optiques (110a-110d) comprend 12 fibres optiques.

8. Câble de fibre optique (100) selon la revendication 1, selon lequel le tube tampon (120) présente un diamètre intérieur de 3,5 millimètres et un diamètre extérieur de 4,4 millimètres.

9. Câble de fibre optique (100) selon la revendication 1, selon lequel le tube tampon (120) présente une épaisseur de 0,5 millimètre.

10. Câble de fibre optique (100) selon la revendication 1, selon lequel le câble de fibre optique (100) présente un diamètre de câble de 7,6 millimètres.

11. Câble de fibre optique (100) selon la revendication 1, selon lequel la deuxième couche (130) présente une épaisseur de 1,4 millimètres.
